# EUROPEAN PATENT APPLICATION

(11) **EP 1 591 021 A1**
(43) Date of publication of application: **02.11.2005**
(21) Application number: 05251265.4
(22) Date of filing: 03.03.2005
(51) Int. Cl.: A23L 2/56, A23L 2/60, A23L 2/38

(54) **Low-calorie beverages with improved flavour**

(30) Priority: 26.04.2004 JP 2004129758
(71) Applicant: Ajinomoto Co., Inc., Tokyo 104-8315 (JP)
(72) Inventor: Isoya, Naoko c/o Ajinomoto Co., Inc., Kawasaki-shi Kanagawa (JP); Tomiyama, Yasuyuki c/o Ajinomoto Co., Inc., Kawasaki-shi Kanagawa (JP); Sato, Keiko c/o Ajinomoto Co., Inc., Kawasaki-shi Kanagawa (JP)
(74) Representative: Nash, David Allan

(57) **Abstract**

The invention described herein improves the suppression or the control of a flavor in sucralose-containing beverages by incorporating aspartame into the beverage. Thus the present invention provides a low-calorie beverage, containing at least one flavoring ingredient, aspartame and sucralose, where the aspartame:sucralose weight ratio is from 1:1 to 10:1.

## Description

### BACKGROUND OF THE INVENTION

### FIELD OF THE INVENTION

The present invention relates to low-calorie beverages with an improved flavor containing sucralose and aspartame (APM).

### DESCRIPTION OF THE BACKGROUND ART

Sweeteners having high sweetness, such as APM, saccharin, stevioside, acesulfame K and sucralose have been widely used in dietary foods because of their intensive sweetness. Especially in the field of beverages, which are consumed in high quantities, they have found wide acceptance in low-calorie beverages such as reduced-calorie or non-calorie beverages and sugarless products.

However, consumers have long been accustomed to tastes of the products (hereinafter referred to as regular products) using sugar or high fructose corn syrup (hereinafter abbreviated HFCS). Accordingly consumers may feel the taste of products using high intensity sweeteners to be strange or unpleasant.

In particular, products containing sucralose are weaker in flavor than regular products. Also, a strange taste and flavor which are suppressed by an added flavoring ingredient, for example, bitterness ascribable to carbon dioxide gas in carbonated beverages, is sometimes enhanced. Alternatively, when low-calorie beverages are produced using sugar and sucralose in combination, the calorie content can be controlled, but the flavor strength is much lower than the strength of the flavor inherent in products prepared using sugar. Accordingly, even though this problem is mitigated by, for example, increasing the concentration of a flavoring ingredient, there is a delicate difference in the balance of flavor between the low-calorie beverages and the regular products. At any rate, in beverages for which the flavor is given much weight commercially, the commercial value is spoiled by the decrease in flavor.

Meanwhile, APM is known to enhance certain flavors, especially the fruit flavor of fruit products and fruit-tasting foods, and a fruit flavor is considered to be enhanced and improved by adding APM to foods at an APM concentration of from 0.001 to 0.2% by weight based on the final product (GB-A-1418087 and JP-A-49/69876).

It was however hitherto not known that sucralose also has an intensive sweetness and does not enhance the flavor, but rather suppresses it. Needless to say, prior to the present invention, it was not known that a flavor is improved by incorporating APM in such sucralose-containing products.

### SUMMARY OF THE INVENTION

The present invention aims to improve the suppression or the decrease of the flavor in sucralose-containing beverages which has been found to be caused by the presence in the beverage of the sucralose.

In accordance with the present invention, it has been found that the flavor of beverages, especially carbonated beverages using sucralose, can unexpectedly be improved and enhanced by incorporating APM therein.

Thus, in one aspect, the present invention relates to low-calorie beverages with an improved flavor containing a flavoring ingredient and sucralose, characterized in that the beverage contains APM at an APM: sucralose weight ratio of from 1:1 to 10:1.

The present invention can improve the decrease in flavor of low-calorie beverages containing a flavoring ingredient and sucralose by incorporating APM and provide low-calorie beverages which stably maintain sweetness and flavor for a long period of time.

The invention also provides a method of making the beverage of the first aspect of the present invention, comprising combining the flavoring ingredient, aspartame and sucralose in suitable amounts to obtain the desired beverage.

The invention further relates to the use of aspartame in a low calorie beverage comprising a flavoring ingredient and sucralose, for the purpose of improving the flavor of the beverage, and to the use of aspartame in a low calorie beverage comprising a flavoring ingredient and sucralose, for the purpose of overcoming the flavor-suppressing effect of the sucralose.

### BRIEF DESCRIPTION OF THE DRAWING

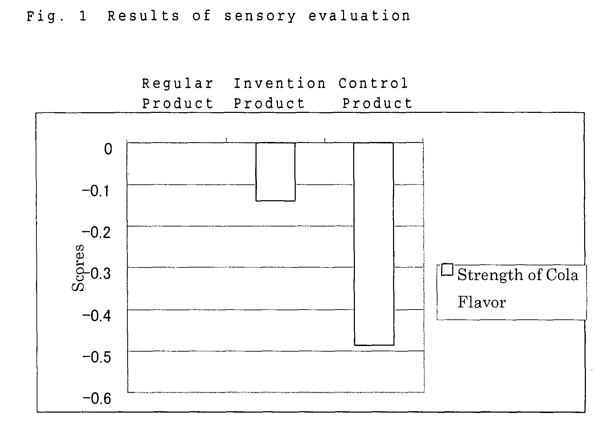

Figure 1 shows the results of a sensory evaluation on the strength of a cola flavor in the beverages of Example 1.

### DETAILED DESCRIPTION OF THE PREFERRED EMBODIMENTS

The beverages of the present invention are carbonated beverages, isotonic drinks, fruit juice beverages, milk beverages, tea beverages and the like. Carbonated beverages are defined to be, according to the definition of JAS standards, "beverages obtained by incorporating carbon dioxide gas into water for beverages under pressure, and beverages obtained by adding thereto a sweetener, an acidulant, a flavoring ingredient and the like".

The flavoring ingredient in the present invention is not particularly limited. Examples thereof include cola-type flavoring ingredients such as cinnamon, caramel, ginger and cola, fruit flavoring ingredients such as apple, lemon, peach, berry, orange, grape, melon, pineapple, kiwifruit, cherry, mango, guava and grapefruit, herb-type flavoring ingredients and the like. However, these are not critical. The flavoring ingredients which are used either singly or as an admixture of two or more flavors as required, can be used in order to improve the flavor according to the invention.

It has been found that, especially in carbonated beverages such as cola, when sucralose is solely used as a sweetener, the cola flavor is suppressed, and as a result, bitterness due to carbon dioxide gas is enhanced. However, this defect can be overcome by incorporating APM in the beverage. Thus, in a preferred embodiment, the beverage of the present invention is a cola flavored beverage, which may be a carbonated beverage.

The concentration of the flavoring ingredient can be determined depending on the desired beverages, and it is not particularly limited.

APM is contained such that the APM:sucralose weight ratio is from about 1:1 to 10:1. This range includes all specific values and subranges therebetween, such as 1.5:1, 2:1, 2.5:1,-3:1, 4:1, 5:1, 6:1, 7:1, 8:1 and 9:1. Outside this range, namely, when the weight of sucralose is larger than that of APM, the effect of improving the flavor is poor. When the weight ratio of APM is increased, the flavor is improved, and the single use of APM is best only from the flavor point of view. However, as far as sucralose is used in combination with APM, products which favorably compare with the regular products in view of the balance of the sweetness and the flavor can be provided when the weight ratio of sucralose and APM is in the foregoing range. Further, beverages containing APM and sucralose at an APM:sucralose ratio of from 1:1 to 10:1, preferably from 2:1 to 8:1, more preferably from 3:1 to 6:1 have sweetness and flavor of a satisfactory commercial value, i.e. the beverage is stable, after long-term storage for 3 to 9 months.

The concentration of APM and sucralose in the beverages can properly be determined depending on the desired sweetness. For example, the beverages of the invention may be formulated to have a sweetness intensity, calculated as sugar, of at least 1 wt% and preferably no more than 20 wt%, and in preferred embodiments at least 5wt% and no more than 15 wt%, for example 10wt%. Since APM and sucralose are 200 times and 600 times sweeter than sugar respectively, it can be calculated that for a sweetness of 10wt% calculated as sugar, the concentrations of APM and sucralose may range from 0.0125% of APM and 0.0125% of sucralose to 0.0385% of APM and 0.00385% of sucralose. More generally, the concentration of APM may be at least 0.00125% (preferably 0.00625%), and may be up to 0.077% (preferably 0.0578%), and the concentration of sucralose may be at least 0.000385% (preferably 0.001925%), and may be up to 0.025% (preferably 0.01875%). The strength of sweetness somewhat varies depending on a balance with a sour taste or a quality of a flavoring ingredient, but suitable adjustment of concentrations is within the skill of one of ordinary skill in the art.

The combined use in the beverage of the present invention of low intensity sweeteners, for example, saccharides such as sugar and high fructose corn syrup (HFCS), sugar alcohols such as maltitol, sorbitol and lactitol, lactose, trehalose and dextrin can allow, together with the effect obtained in accordance with the invention, an improvement in mouth-fullness or the control of calorie.

Further, fruit juices, caramel, acidulants and the like can also be incorporated in the beverages of the present invention.

### EXAMPLES

The invention is illustrated in more detail below by reference to the Examples. However, the scope of the invention is not limited by these Examples.

### Example 1: Half-Calorie Cola

A half calorie cola was prepared according to the formulation shown in Table 1 below in which the amount of each component is given as parts per thousand by weight, and the strength of the cola flavor was evaluated by a panel of sweetener experts (n=8). The evaluation was performed by the paired comparison method of Scheffe. The strength of the flavor was evaluated with 7 grades: -3/ (very weak) /-2 (weak) /-1 (slightly weak) /0 (equal) /1 (slightly strong) /2 (strong) /3 (very strong). An average value of scores of each panelist is shown in Figure 1. As a result of the evaluation, and as shown in Figure 1, the strength of the cola flavor was in the order of regular product (only saccharides) >invention product> control product (saccharides and sucralose). This result illustrates that incorporation of sucralose along with saccharides suppresses the cola flavor and the further incorporation of APM overcomes the suppression of the cola flavor, whereby the formulation is rendered closer to a formulation containing saccharides alone. In addition, is was confirmed that the beverage of the invention was maintained in sweetness, flavor and other qualities for more than 9 months, which is the period of time which is commonly used to measure the stability of half-calorie cola.

**Table 1**

| Formulation table (half-calorie cola) | | | |
|---|---|---|---|
| | **Regular product** | **Invention product** | **Control product** |
| Sugar | 58.5 | 29.3 | 29.3 |
| HFCS | 39.0 | 19.5 | 19.5 |
| APM | - | 0.112 | - |
| Sucralose | - | 0.035 | 0.087 |
| Cola base (*) | 2.0 | 2.0 | 2.0 |
| Citric acid | 0.25 | 0.25 | 0.25 |
| Sodium citrate | 0.1 | 0.1 | 0.1 |
| 80% Phosphoric acid | 0.3 | 0.3 | 0.3 |
| Cola flavor (**) | 1.0 | 1.0 | 1.0 |
| Treated water | balance | balance | balance |
| Total | 1000 | 1000 | 1000 |

| | | | |
|---|---|---|---|
| *Manufactured by Takasago Koryo Kogyo K.K. | | | |
| **Manufactured by Takasago Koryo Kogyo K.K. | | | |

### Example 2: Zero-Calorie Cola

A zero-calorie cola was prepared according to the formulation shown in Table 2 below in which the amount of each component is given as parts per thousand by weight, and the strength of a cola flavor was evaluated by a panel of sweetener experts (n=8). As a result of the evaluation, the strength of the cola flavor was in the order of regular product (only saccharides) >invention product>comparison product>control product (only sucralose). The comparison product was nearly equal to the control product. This result illustrates that incorporation of sucralose suppresses the cola flavor, and a suitable further incorporation of an amount of APM overcomes the suppression of the cola flavor, whereby the formulation is rendered closer to a formulation using saccharides alone. In addition, it was confirmed that the beverage of the invention was maintained in sweetness, flavor and other qualities for more than 6 months, which is the period of time which is commonly used to measure the stability of zero-calorie cola.

**Table 2**

| Formulation table (zero-calorie cola) | | | | |
|---|---|---|---|---|
| | **Regular product** | **Invention product** | **Comparison product** | **Control product** |
| Sugar | 58.5 | - | - | - |
| HFCS | 39.0 | - | - | - |
| APM | - | 0.300 | - | 0.05 |
| Sucralose | - | 0.07 | 0.167 | 0.15 |
| Cola base (*) | 2.0 | 2.0 | 2.0 | 2.0 |
| Citric acid | 0.25 | 0.25 | 0.25 | 0.25 |
| Sodium citrate | 0.1 | 0.1 | 0.1 | 0.1 |
| 80% Phosphoric acid | 0.3 | 0.3 | 0.3 | 0.3 |
| Cola flavor(**) | 1.0 | 1.0 | 1.0. | 1.0 |
| Treated water | balance | balance | balance | balance |
| Total | 1000 | 1000 | 1000 | 1000 |

| | | | | |
|---|---|---|---|---|
| *Manufactured by Takasago Koryo Kogyo K.K. | | | | |
| **Manufactured by Takasago Koryo Kogyo K.K. | | | | |

## Claims

1. A low-calorie beverage, comprising at least one flavoring ingredient, aspartame and sucralose, wherein the aspartame:sucralose weight ratio is from 1:1 to 10:1.

2. The beverage of Claim 1, wherein the aspartame:sucralose weight ratio is from 2:1 to 8:1.

3. The beverage of Claim 1, wherein the aspartame:sucralose weight ratio is from 3:1 to 6:1.

4. The beverage of Claim 1, which is a carbonated beverage.

5. The beverage of Claim 1, which is a cola.

6. The beverage of Claim 1, which is an isotonic drink, fruit juice beverage, milk beverage, or a tea beverage.

7. The beverage of Claim 1, wherein the flavoring agent is one or more members selected from the group consisting of cinnamon, caramel, ginger, fruit flavoring ingredients and herb-type flavoring ingredients.

8. The beverage of Claim 7, wherein the flavoring agent contains one or more fruit flavoring ingredients selected from the group consisting of apple, lemon, peach, berry, orange, grape, melon, pineapple, kiwifruit, cherry, mango, guava and grapefruit.

9. The beverage of Claim 7, wherein the flavoring agent contains one or more fruit flavoring ingredients selected from the group consisting of apple, lemon, peach, berry and grapefruit.

10. The beverage of Claim 1, which contains at least one fruit juice.

11. The beverage of Claim 1, wherein the concentrations of aspartame and sucralose (by weight) range from 0.0125% of aspartame and 0.0125% of sucralose to 0.0385% of aspartame and 0.0385% of sucralose.

12. The beverage of Claim 1, wherein the sweetness and flavor of the beverage is stable after long-term storage for 3 to 9 months.

13. A method of making the beverage of Claim 1, comprising combining the flavoring ingredients, aspartame and sucralose.

14. The use of aspartame in a low calorie beverage comprising a flavoring ingredient and sucralose, for the purpose of improving the flavor of the beverage.

15. The use of aspartame in a low calorie beverage comprising a flavoring ingredient and sucralose, for the purpose of overcoming the flavor-suppressing effect of the sucralose.
